# EUROPEAN PATENT APPLICATION

(11) **EP 4 645 939 A1**
(43) Date of publication of application: **05.11.2025**
(21) Application number: 22969533.3
(22) Date of filing: 27.12.2022
(51) Int. Cl.: H04W 24/08, H04W 24/10, H04W 4/12

(54) **INFORMATION INDICATION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: RGTH
(86) International application number: PCT/CN2022/142446
(87) International publication number: WO 2024/138376

(57) **Abstract**

The present disclosure discloses an information indication method and apparatus, a device, a medium, and a program product, and relates to the field of communications. The method is performed by a candidate sensing auxiliary device, and the method includes: sending indication information, where the indication information is used to indicate that the candidate sensing auxiliary device serves as a sensing auxiliary device participating in a sensing process in a case where a first condition is met. In the method, by indicating that the candidate sensing auxiliary device serves as the sensing auxiliary device participating in the sensing process in a case where the first condition is met, the sensing auxiliary device is selected more accurately, and unnecessary energy consumption overhead is reduced.

## Description

### TECHNICAL FIELD

Embodiments of the present disclosure relate to the field of communications, and particularly, to an information indication method and apparatus, a device, a medium, and a program product.

### BACKGROUND

Radio electromagnetic wave signals used by cellular networks may be used not only for wireless data transmission and communication, but also for acquiring sensing information.

For an air interface uplink/downlink sensing link or a sensing link between terminals in integrated communication and sensing, a terminal device is required to serve as a sensing receiving node or a sensing transmitting node.

However, in a case where the terminal device serves as the sensing receiving node or the sensing transmitting node, the terminal device has a lot of energy consumption overhead due to the sensing behavior.

### SUMMARY

The present disclosure provides an information indication method and apparatus, a device, a medium, and a program product, for reducing unnecessary energy consumption overhead in a sensing process. The technical solutions include at least the following.

According to an aspect of embodiments of the present disclosure, an information indication method is provided, the method is performed by a candidate sensing auxiliary device, and the method includes:
sending indication information, where the indication information is used to indicate that the candidate sensing auxiliary device servers as a sensing auxiliary device participating in a sensing process in a case where a first condition is met.

According to another aspect of embodiments of the present disclosure, an information indication method is provided, the method is performed by a sensing node device, and the method includes:
receiving indication information sent by a candidate sensing auxiliary device, where the indication information is used to indicate that the candidate sensing auxiliary device servers as a sensing auxiliary device participating in a sensing process in a case where a first condition is met; and
confirming, based on the indication information, whether the candidate sensing auxiliary device is the sensing auxiliary device.

According to yet another aspect of embodiments of the present disclosure, an information indication apparatus is provided, and the apparatus includes:
a sending module configured to send indication information, where the indication information is used to indicate that a candidate sensing auxiliary device servers as a sensing auxiliary device participating in a sensing process in a case where a first condition is met.

According to yet another aspect of embodiments of the present disclosure, an information indication apparatus is provided, and the apparatus includes:
a receiving module configured to receive indication information sent by a candidate sensing auxiliary device, where the indication information is used to indicate that the candidate sensing auxiliary device servers as a sensing auxiliary device participating in a sensing process in a case where a first condition is met; and
a confirmation module configured to confirm whether the candidate sensing auxiliary device is the sensing auxiliary device based on the indication information.

According to yet another aspect of embodiments of the present disclosure, a candidate sensing auxiliary device is provided, and the candidate sensing auxiliary device includes:
a processor;
a transceiver connected to the processor; and
a memory for storing an executable instruction of the processor;
where the processor is configured to load and execute the executable instruction to implement the information indication method as described in each of the above aspects.

According to yet another aspect of embodiments of the present disclosure, a sensing node device is provided, and the sensing node device includes:
a processor;
a transceiver connected to the processor; and
a memory for storing an executable instruction of the processor;
where the processor is configured to load and execute the executable instruction to implement the information indication method as described in each of the above aspects.

According to yet another aspect of embodiments of the present disclosure, a computer-readable storage medium is provided, in which at least one instruction, at least one program, code set or instruction set is stored, and the at least one instruction, at least one program, code set or instruction set is loaded and executed by a processor to implement information indication method as described in each of the above aspects.

According to yet another aspect of embodiments of the present disclosure, a computer program product or a computer program is provided, and the computer program product or computer program includes computer instructions stored in a computer-readable storage medium; a processor reads the computer instructions from the computer-readable storage medium, and the processor executes the computer instructions, so that a candidate sensing auxiliary device or sensing node device executes the information indication method as described in each of the above aspects.

The technical solutions provided in the embodiments of the present disclosure may have the following beneficial effects.

In the present disclosure, by sending the indication information that is used to indicate that the candidate sensing auxiliary device serves as the sensing auxiliary device participating in the sensing process in a case where the first condition is met, it helps a sensing node device select the sensing auxiliary device more accurately, thereby reducing unnecessary energy consumption overhead.

### BRIEF DESCRIPTION OF THE DRAWINGS

In order to describe the technical solutions in the embodiments of the present disclosure more clearly, accompanying drawings to be used in the description of the embodiments will be introduced briefly below. Obviously, the accompanying drawings in the following description are merely some embodiments of the present disclosure. For those ordinary skilled in the art, other drawings can also be obtained based on these drawings, without creative work.
FIG. 1 is a schematic diagram of a network architecture provided in an exemplary embodiment of the present disclosure.
FIG. 2 is a schematic diagram of a network system architecture provided in the related art.
FIG. 3 is a flow chart of a method for controlling an access network device or a terminal to perform terminal-level sensing operations provided in the related art.
FIG. 4 is a schematic diagram of a main wireless sensing mode of integrated communication and sensing provided in the related art.
FIG. 5 is a flow chart of a sidelink discovery process mode A provided in the related art.
FIG. 6 is a flow chart of a sidelink discovery process mode B provided in the related art.
FIG. 7 is a flow chart of an information indication method provided in an exemplary embodiment of the present disclosure.
FIG. 8 is a flow chart of an information indication method provided in an exemplary embodiment of the present disclosure.
FIG. 9 is a flow chart of an information indication method provided in an exemplary embodiment of the present disclosure.
FIG. 10 is a schematic diagram showing an implementation environment of an information indication method provided in an exemplary embodiment of the present disclosure.
FIG. 11 is a flow chart of an information indication method provided in an exemplary embodiment of the present disclosure.
FIG. 12 is a flow chart of an information indication method provided in an exemplary embodiment of the present disclosure.
FIG. 13 is a block diagram of an information indication apparatus provided in an exemplary embodiment of the present disclosure.
FIG. 14 is a block diagram of an information indication apparatus provided in an exemplary embodiment of the present disclosure.
FIG. 15 is a schematic diagram showing a structure of a candidate sensing auxiliary device or sensing node device provided in an exemplary embodiment of the present disclosure.

### DETAILED DESCRIPTION

In order to make the purposes, technical solutions and advantages of the present disclosure more clear, the implementations of the present disclosure will be further described in detail below with reference to the accompanying drawings.

The exemplary embodiments will be described in detail herein, examples of which are represented in the accompanying drawings. When the following description refers to the drawings, the same numbers in different drawings represent the same or similar elements unless otherwise indicated. The implementations described in the following exemplary embodiments are not intended to represent all implementations consistent with the present disclosure, but rather they are merely examples of apparatuses and methods consistent with some aspects of the present disclosure as recited in the appended claims.

The terminologies used in the present disclosure are for the purpose of describing particular embodiments only and are not intended to be limiting of the present disclosure. As used in the present disclosure and the appended claims, the singular forms "a", "an" and "the" are intended to include the plural forms as well, unless the context clearly indicates otherwise. It should also be understood that the term "and/or" as used herein refers to and includes any or all possible combinations of one or more of the associated listed items.

It should be noted that user information (including but not limited to user device information, user personal information, etc.) and data (including but not limited to data used for analysis, stored data, displayed data, etc.) involved in the present disclosure are all information and data authorized by the user or fully authorized by all parties, and collection, use and processing of relevant data must comply with relevant laws, regulations and standards of relevant countries and regions.

It should be understood that although the terms such as first and second may be used in the present disclosure to describe various information, the information should not be limited to these terms. These terms are used only to distinguish information of the same type from one another. For example, without departing from the scope of the present disclosure, a first parameter may also be referred to as a second parameter, and similarly, a second parameter may also be referred to as a first parameter. The word "if" as used herein may be interpreted as "in a case where", "when", or "in response to determining" depending on the context.

The term "sensing" in the present disclosure may also be construed as at least one of: positioning, ranging, speed measurement, angle measurement, target imaging, target detection, target tracking and target recognition.

Some key terms in the present disclosure are briefly introduced as follows:
decibel relative to one milliwatt (dBm): a pure counting unit that refers to an absolute value of power.

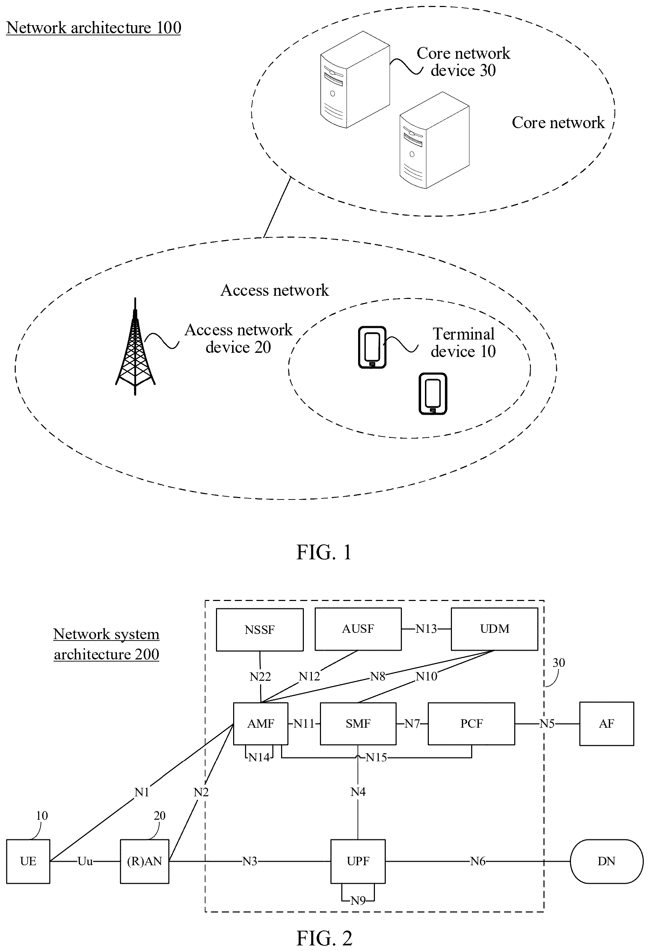

FIG. 1 is a schematic diagram of a network architecture 100 provided in an exemplary embodiment of the present disclosure. The network architecture 100 includes: a terminal device 10, an access network device 20 and a core network device 30.

The terminal device 10 may be referred to as user equipment (UE), an access terminal, a user unit, a user station, a mobile station, a mobile platform, a remote station, a remote terminal, a mobile device, a wireless communication device, a user agent, or a user apparatus. Optionally, the terminal device 10 may also be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in the 5th generation system (5GS), or a terminal device in the future evolved public land mobile network (PLMN), and the embodiments of the present disclosure are not limited to this. For the convenience of description, the above-mentioned devices are collectively referred to as terminal devices. The number of terminal devices 10 is usually multiple, and one or more terminal devices 10 may be distributed in a cell managed by each access network device 20. The terminal devices 10 include a candidate sensing auxiliary device.

The access network device 20 is a device deployed in the access network and used for providing a wireless communication function for the terminal device 10. The access network devices 20 may include various forms of macro base stations, micro base stations, relay stations, access points, etc. In systems using different wireless access technologies, the names of devices with an access network device function may be different. For example, in the 5th generation new radio (5G NR) system, the device with the access network device function is referred to as the next-generation base station (gNodeB, gNB). As the communication technology evolves, the name "access network device" may change. For the convenience of description, in the embodiments of the present disclosure, the above-mentioned devices that provide the wireless communication function for the terminal device 10 are collectively referred to as access network devices. Optionally, a communication relationship may be established between the terminal device 10 and the core network device 30 through the access network device 20. For example, in the long term evolution (LTE) system, the access network device 20 may be an evolved universal terrestrial radio access network (EUTRAN) or one or more evolved base stations in EUTRAN; in the 5G NR system, the access network device 20 may be a radio access network (RAN) or one or more gNBs in RAN. In the embodiments of the present disclosure, unless otherwise specified, the network device refers to the access network device 20, such as a base station.

The core network device 30 is a device deployed in the core network. The functions of the core network device 30 are mainly to provide user connection, user management and service bearing, and to provide an interface to an external network as a bearer network. For example, the core network device in the 5G NR system includes an access and mobility management function (AMF) network element, a user plane function (UPF) network element, and a session management function (SMF) network element.

In some embodiments, the access network device 20 and the core network device 30 communicate with each other through some air interface technology, such as an NG interface in the 5G NR system. The access network device 20 and the terminal device 10 communicate with each other via some air interface technology, such as a Uu interface.

FIG. 2 is a schematic diagram of a network system architecture 200 provided in the related art. The network system architecture 200 includes: a terminal device 10, an access network device 20 and a core network device 30.

The core network device 30 includes a network slice selection function (NSSF), an authentication server function (AUSF), a unified data management (UDM), an access and mobility management function (AMF), a session management function (SMF), a policy control function (PCF), a user plane function (UPF), and a sensing function (SF).

Through the Uu interface, the UE establishes an access stratum connection with the access network (AN), exchanges access stratum messages with the AN, and performs wireless data transmission with the AN. Through the N1 interface, the UE establishes a none access stratum (NAS) connection with the AMF, and exchanges NAS messages with the AMF. The AMF is the mobility management function in the core network, and the SMF is the session management function in the core network. In addition to performing the mobility management on the UE, the AMF is also responsible for forwarding session management related messages between the UE and the SMF. The PCF is the policy management function in the core network, and is responsible for formulating policies related to the mobility management, session management, and billing for UE, and the PCF performs data transmission with an external application function (AF) through the N5 interface. The UPF is a user plane function in the core network, performs data transmission with an external data network (DN) through the N6 interface, and performs data transmission with the AN through the N3 interface.

The "5G NR system" in the embodiments of the present disclosure may also be referred to as a 5G system or an NR system, and those skilled in the art can understand its meaning. The technical solutions described in the embodiments of the present disclosure may be applicable to LTE systems, 5G NR systems, subsequent evolution systems of 5G NR systems, or other communication systems such as narrow band Internet of Things (NB-IoT) systems, which are not limited in the embodiments of the present disclosure.

Current cellular networks, including 5G networks, are used for communication only. However, radio electromagnetic wave signals used by the cellular networks may not only be used for wireless data transmission and communication, but also have environment sensing abilities, such as an ability to sense the user's movements or gestures, and an ability to perform breathing monitoring, terminal movement speed measurement, environmental imaging or weather monitoring. Therefore, in the future, cellular networks may not only be used for communication and data transmission, but also for acquiring sensing information.

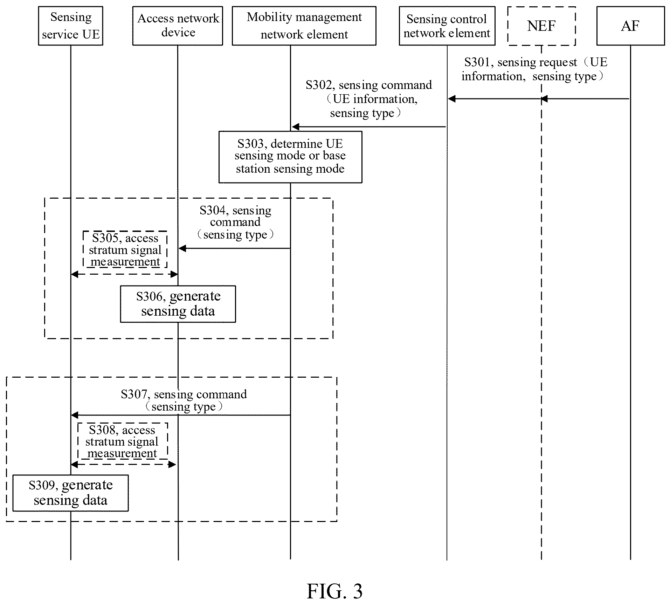

In the related art, the 5G network supports sensing abilities, and supports sensing functions in the 3rd generation partnership project (3GPP) network through an SF network element and corresponding processes. FIG. 3 is a flow chart of a method for controlling an access network device or UE to perform UE-level sensing operations provided in the related art. As shown in FIG. 3, the method includes the following steps.

In step 301, an application (AF) sends a sensing request.

The application (AF) sends a sensing request for a sensing service UE to the core network of the 3GPP network, and the sensing request carries information of the sensing service UE and a sensing type.

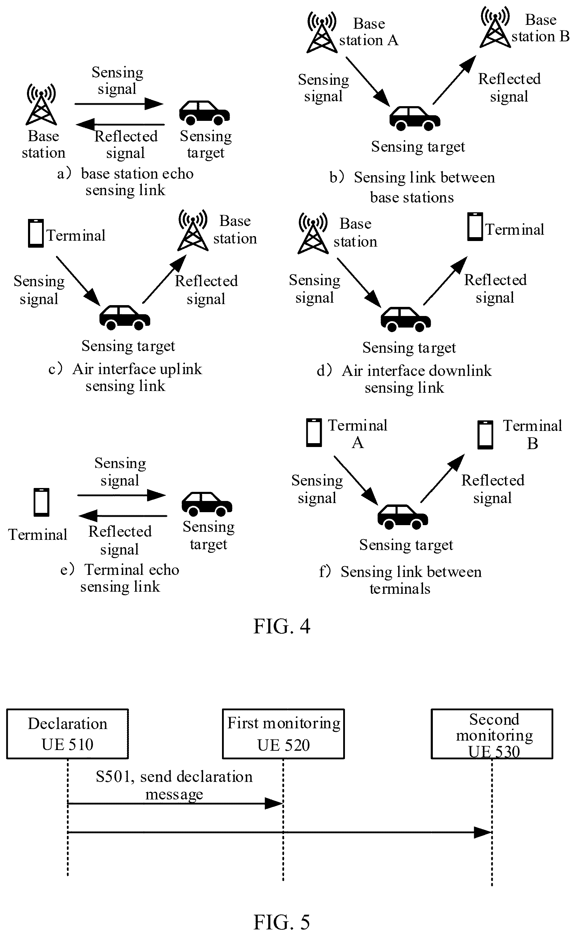

The main wireless sensing modes of integrated communication and sensing are shown in FIG. 4, which include:
a) base station (access network device) echo sensing link, in which the base station (access network device) sends a sensing signal and receives an echo signal;
b) sensing link between base stations, in which base station B receives a sensing signal sent by base station A;
c) air interface uplink sensing link, in which the base station receives a sensing signal sent by the terminal;
d) air interface downlink sensing link, in which the terminal receives a sensing signal sent by the base station;
e) terminal echo sensing link, in which the terminal sends a sensing signal and receives an echo signal;
f) sensing link between terminals, in which terminal B receives a sensing signal sent by terminal A.

Based on the above scenarios, sensing types include: access network device echo sensing, sensing between access network devices, air interface uplink sensing, air interface downlink sensing, terminal device echo sensing, and sensing between terminal devices.

In step 302, a sensing control network element sends a sensing command.

The core network selects an access network device or an auxiliary UE, participating in sensing, via the sensing control network element (SF) or AMF, triggers a process of performing sensing-related wireless measurements, initiates the measurement of sensing information, and generates a sensing result. For example, the SF sends a sensing command to the AMF, and the sensing command carries the information of the sensing service UE and the sensing type.

In step 303, a mobility management network element determines a UE sensing mode or a base station sensing mode.

In step 304, the mobility management network element sends a sensing command.

In a case where the sensing type is the air interface uplink sensing, the AMF sends the sensing command to the access network device, and the sensing command includes the sensing type.

In step 305, the access network device and the sensing service UE perform an access stratum signal measurement.

In step 306, the access network device generates sensing data.

In step 307, the mobility management network element sends a sensing command.

In a case where the sensing type is the air interface downlink sensing, the AMF sends the sensing command to the sensing service UE, and the sensing command includes the sensing type.

In step 308, the sensing service UE and the access network device perform an access stratum signal measurement.

In an initial stage of 5G integrated communication and sensing, a sensing signal for performing sensing may adopt an existing air interface signal, such as a channel sounding reference signal (SRS), a demodulation reference symbol (DMRS), a channel state information reference signal (CSI-RS), a phase tracking reference signal (PTRS), or a positioning reference signal (PRS). The existing air interface signal, which serves as the sensing signal, performs the sensing behavior without introducing excessive air interface enhancement.

In step 309, the sensing service UE generates sensing data.

FIG. 5 is a flow chart of a sidelink discovery process mode A provided in the related art, and in this mode, two roles are defined for UEs participating in the discovery process: (1) declaration UE: a UE for declaring certain information that may be used by neighboring UEs with discovery permission; and (2) monitoring UE: a UE for monitoring certain information of interest in the neighborhood of the declaration UE.

In this mode, the declaration UE broadcasts a sensing discovery message at a predefined discovery interval, and the monitoring UE interested in the sensing discovery message reads and processes the sensing discovery message. This mode is equivalent to "I am here" in that the declaration UE can broadcast information about itself. In an example where the mode includes a declaration UE 510, a first monitoring UE 520, and a second monitoring UE 530, and the mode includes the following steps.

In step 501, the declaration UE sends a declaration message.

The declaration UE 510 broadcasts the declaration message (i.e., the sensing discovery message) at a predefined discovery interval, and the first monitoring UE 520 and the second monitoring UE 530 that are interested in the declaration message receive and process the declaration message.

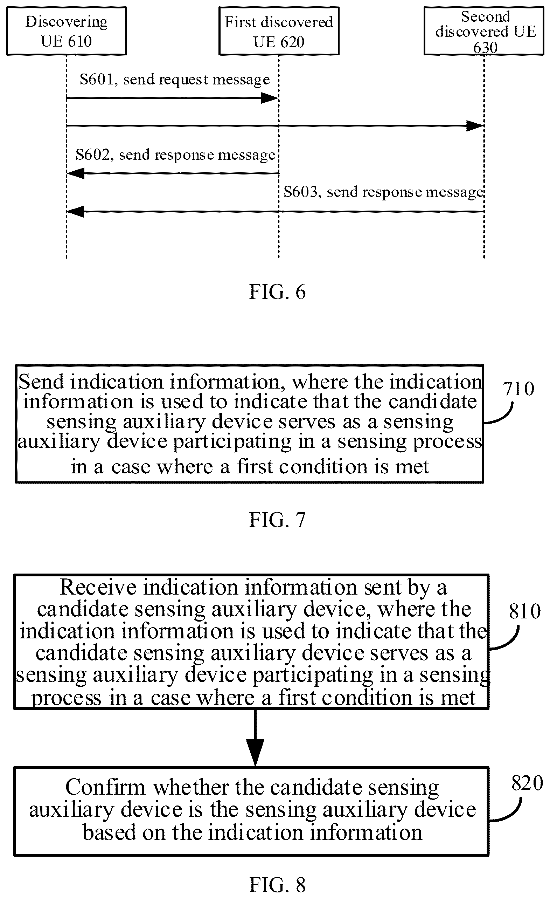

FIG. 6 is a flow chart of a sidelink discovery process mode B provided in the related art, and in this mode, two roles are defined for UEs participating in the discovery process. (1) discovering UE: the UE sends a request, which includes information about what the UE is interested in discovering. (2) discovered UE: the UE that receives the request message may respond with information related to the request message.

This mode is equivalent to "who is there/are you there", as the discovering UE sends a request message in the hope of receiving information from the UE that sends a response message. The information may be a proximity services (ProSe) application identifier corresponding to a group, members of the group may respond to the request message.

In an example where the mode includes a discovering UE 610, a first discovered UE 620, and a second discovered UE 630, the mode includes the following steps.

In step 601, the discovering UE sends a request message.

The discovering UE 610 sends the request message in the hope of receiving a response message from other UEs.

In step 602, the first discovered UE sends a response message.

After receiving the request message, the first discovered UE 620 sends the response message to the discovering UE 610, and the response message includes relevant information of the first discovered UE 620.

In step 603, the second discovered UE sends a response message.

After receiving the request message, the second discovered UE 630 sends the response message to the discovering UE 610, and the response message includes relevant information of the second discovered UE 630.

The present disclosure provides an information indication method, in which a candidate sensing auxiliary device (UE) may indicate a first condition to a network device or other UE, thereby indicating that the candidate sensing auxiliary device serves as a sensing auxiliary device participating in a sensing process in a case where the first condition is met.

FIG. 7 is a flow chart of an information indication method provided in an exemplary embodiment of the present disclosure. The method is performed by a candidate sensing auxiliary device, and the method includes the following step.

In step 710, indication information is sent, and the indication information is used to indicate that the candidate sensing auxiliary device servers as a sensing auxiliary device participating in a sensing process in a case where a first condition is met.

The indication information is used to indicate that in a case where the first condition is met, the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process.

In this embodiment, the first condition is used to indicate that a sensing condition of the candidate sensing auxiliary device is better than a threshold value. For example, the first condition is met in a case where a distance between a sensing target and the candidate sensing auxiliary device is less than the threshold value.

Alternatively, the first condition is used to indicate that energy consumption of the candidate sensing auxiliary device during the sensing process is less than a threshold value. For example, in a case where a current candidate sensing auxiliary device is selected as the sensing auxiliary device, the first condition is met based on the energy consumption of the current candidate sensing auxiliary device being less than the threshold value.

Alternatively, the first condition is used to indicate that the candidate sensing auxiliary device is related to current sensing service. For example, in a case where the current candidate sensing auxiliary device serves as a sensing receiving node or a sensing transmitting node, the first condition is met based on the current candidate sensing auxiliary device being related to the current sensing service.

Alternatively, the first condition is used to assist a sensing node device in selecting an optimal candidate sensing auxiliary device from multiple candidate sensing auxiliary devices as the sensing auxiliary device. For example, the signal quality between a first candidate sensing auxiliary device among three candidate sensing auxiliary devices and the sensing node device is optimal, and thus the sensing node device selects the first candidate sensing auxiliary device as the sensing auxiliary device.

In some embodiments, the indication information includes threshold information related to the first condition, and the threshold information includes at least one of:
(1) a threshold of a first distance between the candidate sensing auxiliary device and the sensing target;
(2) a threshold of a second distance between the candidate sensing auxiliary device and the sensing node device;
(3) a threshold of a signal quality between the candidate sensing auxiliary device and the sensing node device; and
(4) a threshold of a probability that the sensing link is a line of sight (LOS) path, where the sensing link includes a wireless link when the candidate sensing auxiliary device senses the sensing target.

With respect to (1) a threshold of a first distance between the candidate sensing auxiliary device and the sensing target.

In a case where the distance between the candidate sensing auxiliary device and the sensing target is less than or equal to the first distance threshold, the first condition is met, and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process. For example, the first distance threshold is 100 meters. In a case where the distance between the candidate sensing auxiliary device and the sensing target is 50 meters, the distance is less than the first distance threshold, and the first condition is met; and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process.

With respect to (2) a threshold of a second distance between the candidate sensing auxiliary device and the sensing node device.

In a case where the distance between the candidate sensing auxiliary device and the sensing node device is less than or equal to the second distance threshold, the first condition is met, and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process. For example, the second distance threshold is 200 meters. In a case where the distance between the candidate sensing auxiliary device and the sensing node device is 100 meters, the distance is less than the second distance threshold, and the first condition is met; and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process.

With respect to (3) a threshold of a signal quality between the candidate sensing auxiliary device and the sensing node device.

The reference signal measurement result type used to determine the signal quality includes at least one of: reference signal received power (RSRP), signal to interference and noise ratio (SINR), reference signal received quality (RSRQ), and reference signal received path power (RSRPP). The RSRP is a parameter representing the strength of the wireless signal, the SINR is a ratio of the strength of the received useful signal to the strength of the received noise and interference, the RSRQ is a ratio of the RSRP to the received signal strength indication (RSSI) of the carrier, and the RSRPP is defined as a linear average result of the channel response power of the resource element of the reference signal configured for measurement on the i-th path component, where i is a positive integer.

In a case where the signal quality between the candidate sensing auxiliary device and the sensing node device is greater than or equal to the signal quality threshold, the first condition is met, and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process. For example, in a case where the RSRP transmitted by the candidate sensing auxiliary device is -60 dBm and the signal quality threshold is -80 dBm, the RSRP transmitted by the candidate sensing auxiliary device is greater than the signal quality threshold, and the first condition is met; and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process.

With respect to (4) a threshold of a probability that the sensing link is a LOS path, where the sensing link includes a wireless link when the candidate sensing auxiliary device senses the sensing target.

In a case where there is no obstacle on the sensing link between the current candidate sensing auxiliary device and the sensing target as well as between the sensing target and the sensing node device, the sensing link is the LOS path. Since there is no obstacle, the signal attenuation is reduced, and the signal quality of the LOS path is better than that of the non-LOS path.

In a case where the probability that the sensing link is the LOS path is greater than or equal to the probability threshold value, the first condition is met, and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process. For example, in a case where the probability threshold value is 80% and the probability that the sensing link is the LOS path is 90%, the probability that the sensing link is the LOS path is greater than the probability threshold value, and the first condition is met; and the candidate sensing auxiliary device is capable of serving as the sensing auxiliary device participating in the sensing process, or is allowed to serve as the sensing auxiliary device participating in the sensing process, or agrees to serve as the sensing auxiliary device participating in the sensing process.

In some embodiments, the threshold information is a fixed value preset by the candidate sensing auxiliary device.

Alternatively, the threshold information is a changing value dynamically determined based on the amount of remaining power of the candidate sensing auxiliary device. For example, in a case where the remaining power of the candidate sensing auxiliary device is sufficient, the threshold A of the distance between the candidate sensing auxiliary device and the sensing target is greater than the threshold B of the distance between the candidate sensing auxiliary device and the sensing target in a case where the remaining power of the candidate sensing auxiliary device is insufficient.

Alternatively, the threshold information is a changing value dynamically determined based on the number of computing resources of the candidate sensing auxiliary device. For example, in a case where the computing resources of the candidate sensing auxiliary device are sufficient, the threshold A of the distance between the candidate sensing auxiliary device and the sensing target is greater than the threshold B of the distance between the candidate sensing auxiliary device and the sensing target in a case where the computing resources of the candidate sensing auxiliary device are insufficient.

In some embodiments, the indication information further carries: at least of a method for using the threshold information within the first condition (e.g., at least one of greater than, equal to, and less than), determination input information related to the first condition (e.g., the distance, signal quality or probability measured by the candidate sensing auxiliary device as described above), and a determination result of the candidate sensing auxiliary device on whether the above-mentioned first condition is met.

In some embodiments, the candidate sensing auxiliary device receives a sensing request message sent by the sensing node device. The sensing request message is carried in a request message of the sidelink discovery process mode B. The candidate sensing auxiliary device sends a sensing feedback message to the sensing node device, and the sensing feedback message carries the indication information. The sensing feedback message is carried in a response message of the sidelink discovery process mode B.

In some embodiments, the candidate sensing auxiliary device broadcasts a sensing discovery message, and the sensing discovery message carries the indication information. The sensing discovery message is carried in a declaration message of the sidelink discovery process mode A.

To summarize, in the method provided in the embodiment, the indication information is sent, and the indication information is used to indicate that the candidate sensing auxiliary device serves as the sensing auxiliary device participating in the sensing process in a case where the first condition is met, thereby helping the sensing node device select the sensing auxiliary device more accurately, and reducing unnecessary energy consumption overhead.

FIG. 8 is a flow chart of an information indication method provided in an exemplary embodiment of the present disclosure. The method is performed by a sensing node device, and the method includes the following steps.

In step 810, indication information sent by a candidate sensing auxiliary device is received, and the indication information is used to indicate that the candidate sensing auxiliary device servers as a sensing auxiliary device participating in a sensing process in a case where a first condition is met.

The specific implementation details of step 810 are referred to step 710, which will not be repeated here.

In step 820, it is confirmed whether the candidate sensing auxiliary device is the sensing auxiliary device based on the indication information.

The candidate sensing auxiliary device is determined as the sensing auxiliary device based on the indication information in a case where the first condition is met;
where the first condition is met, which includes at least one of:
(1) a distance between the candidate sensing auxiliary device and a sensing target being less than or equal to the first distance threshold;
(2) a distance between the candidate sensing auxiliary device and the sensing node device being less than or equal to the second distance threshold;
(3) a signal quality between the candidate sensing auxiliary device and the sensing node device being greater than or equal to the signal quality threshold;
(4) a probability that the sensing link is a LOS path being greater than or equal to the probability threshold, where the sensing link includes a wireless link when the candidate sensing auxiliary device senses the sensing target; and
(5) the candidate sensing auxiliary device being related to current sensing service.

With respect to (1) a distance between the candidate sensing auxiliary device and a sensing target being less than or equal to the first distance threshold.

In a case where the distance between the candidate sensing auxiliary device and the sensing target is less than or equal to the first distance threshold, the first condition is met, and the candidate sensing auxiliary device is determined as the sensing auxiliary device based on the indication information. The distance between the candidate sensing auxiliary device and the sensing target is measured by the candidate sensing auxiliary device, and then carried in the indication information that is sent to the sensing node device.

For example, the first distance threshold is 100 meters. In a case where the distance between the candidate sensing auxiliary device and the sensing target is 50 meters, the distance is less than the first distance threshold, and the first condition is met; and the candidate sensing auxiliary device is determined as the sensing auxiliary device based on the indication information.

With respect to (2) a distance between the candidate sensing auxiliary device and the sensing node device being less than or equal to the second distance threshold.

In a case where the distance between the candidate sensing auxiliary device and the sensing node device is less than or equal to the second distance threshold, the first condition is met, and the candidate sensing auxiliary device is determined as the sensing auxiliary device based on the indication information. The distance between the candidate sensing auxiliary device and the sensing node device may be measured by the sensing node device or the candidate sensing auxiliary device, and then carried in the indication information that is sent to the sensing node device.

For example, the second distance threshold is 200 meters. In a case where the distance between the candidate sensing auxiliary device and the sensing node device is 100 meters, the distance is less than the second distance threshold, and the first condition is met; and the candidate sensing auxiliary device is determined as the sensing auxiliary device based on the indication information.

With respect to (3) a signal quality between the candidate sensing auxiliary device and the sensing node device being greater than or equal to the signal quality threshold.

The reference signal measurement result type used to determine the signal quality includes at least one of: RSRP, SINR, RSRQ, and RSRPP. The RSRP is a parameter representing the strength of the wireless signal, the SINR is a ratio of the strength of the received useful signal to the strength of the received noise and interference, the RSRQ is a ratio of the RSRP to the RSSI, and the RSRPP is defined as a linear average result of the channel response power of the resource element of the reference signal configured for measurement on the i-th path component, where i is a positive integer.

In a case where the signal quality between the candidate sensing auxiliary device and the sensing node device is greater than or equal to the signal quality threshold, the first condition is met, and the candidate sensing auxiliary device is determined as the sensing auxiliary device based on the indication information. The signal quality between the candidate sensing auxiliary device and the sensing node device may be measured by the sensing node device or the candidate sensing auxiliary device, and then carried in the indication information that is sent to the sensing node device.

For example, in a case where the RSRP transmitted by the candidate sensing auxiliary device is -60 dBm and the signal quality threshold is -80 dBm, the RSRP transmitted by the candidate sensing auxiliary device is greater than the signal quality threshold, and the first condition is met; and the candidate sensing auxiliary device is determined as the sensing auxiliary device based on the indication information.

With respect to (4) a threshold of a probability that the sensing link is a LOS path, where the sensing link includes a wireless link when the candidate sensing auxiliary device senses the sensing target.

In a case where there is no obstacle on the sensing link between the current candidate sensing auxiliary device and the sensing target as well as between the sensing target and the sensing node device, the sensing link is the LOS path. Since there is no obstacle, the signal attenuation is reduced, and the signal quality of the LOS path is better than that of the non-LOS path.

In a case where the probability that the sensing link is the LOS path is greater than or equal to the probability threshold value, the first condition is met, and the candidate sensing auxiliary device is determined as the sensing auxiliary device based on the indication information. The probability that the sensing link is the LOS path is measured by the candidate sensing auxiliary device, and then carried in the indication information that is sent to the sensing node device.

For example, in a case where the probability threshold value is 80% and the probability that the sensing link is the LOS path is 90%, the probability that the sensing link is the LOS path is greater than the probability threshold value, and the first condition is met; and the candidate sensing auxiliary device is determined as the sensing auxiliary device based on the indication information.

With respect to (5) the candidate sensing auxiliary device being related to current sensing service.

In a case where the candidate sensing auxiliary device is related to the current sensing service, the first condition is met, and the candidate sensing auxiliary device is determined as the sensing auxiliary device based on the indication information. Whether the candidate sensing auxiliary device is related to the current sensing service is measured by the candidate sensing auxiliary device, and then carried in the indication information that is sent to the sensing node device.

For example, the result that the candidate sensing auxiliary device is related to the current sensing service is obtained by measurement of the candidate sensing auxiliary device, and the first condition is met; and the candidate sensing auxiliary device is determined as the sensing auxiliary device based on the indication information.

In some embodiments, the sensing node device sends a sensing request message to the candidate sensing auxiliary device.

The sensing request message is carried in a request message of the sidelink discovery process mode B.

The sensing node device receives a sensing feedback message sent by the candidate sensing auxiliary device, and the sensing feedback message carries the indication information.

The sensing feedback message is carried in a response message of the sidelink discovery process mode B.

In some embodiments, the sensing node device receives a sensing discovery message broadcasted by the candidate sensing auxiliary device, and the sensing discovery message carries the indication information.

The sensing discovery message is carried in a declaration message of the sidelink discovery process mode A.

To summarize, in the method provided in the embodiment, it is confirmed whether the candidate sensing auxiliary device is the sensing auxiliary device based on the indication information, and the indication information is used to indicate that the candidate sensing auxiliary device serves as the sensing auxiliary device participating in the sensing process in a case where the first condition is met, thereby helping the sensing node device select the sensing auxiliary device more accurately, and reducing unnecessary energy consumption overhead.

### UE-gNB sensing

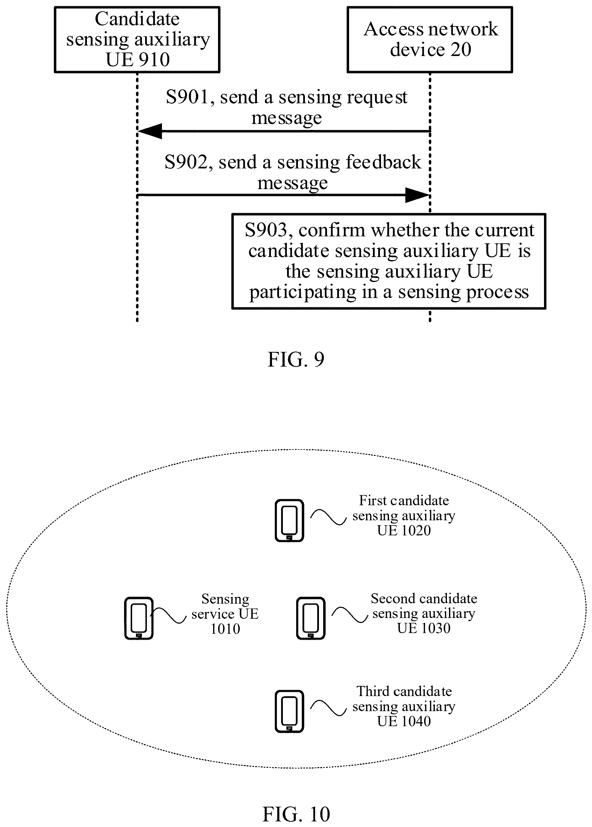

A candidate sensing auxiliary UE reports condition-based auxiliary information to help the network select the sensing auxiliary UE, i.e., the sensing receiving node or the sensing transmitting node. FIG. 9 is a flow chart of an information indication method provided in an exemplary embodiment of the present disclosure. The implementation environment of the method is shown in FIG. 1, and the method is performed by the candidate sensing auxiliary UE 910 in the terminal devices 10 and the access network device 20. The method includes the following steps.

In step 901, the access network device sends a sensing request message.

The candidate sensing auxiliary UE 910 receives the sensing request message sent by the access network device 20 and/or the AMF and/or the SF, and the sensing request message can be sent via a broadcast message, paging message or dedicated signaling. The dedicated signaling includes at least one of: medium access control control element (MAC CE), radio resource control (RRC), and NAS message.

The sensing request message can indicate a sensing type, and the sensing type includes at least one of: air interface uplink sensing, air interface downlink sensing, terminal device echo sensing, and sensing between terminal devices.

In step 902, the candidate sensing auxiliary UE sends a sensing feedback message.

The sensing feedback message carries indication information. The indication information is used to indicate that the candidate sensing auxiliary UE 910 can be used as a sensing auxiliary UE in a case where a first condition is met. The first condition includes at least one of:
(1) a distance between the candidate sensing auxiliary UE 910 and a sensing target being less than or equal to the first distance threshold;
(2) a distance between the candidate sensing auxiliary UE 910 and the access network device 20 being less than or equal to the second distance threshold;
(3) a signal quality between the candidate sensing auxiliary UE 910 and the access network device 20 being greater than or equal to the signal quality threshold; and
(4) a probability that the sensing link is a LOS path being greater than or equal to the probability threshold, where the sensing link includes a wireless link when the candidate sensing auxiliary UE 910 senses the sensing target.

With respect to (1) a distance between the candidate sensing auxiliary UE 910 and a sensing target being less than or equal to the first distance threshold.

In a case where the distance between the candidate sensing auxiliary UE 910 and the sensing target is less than or equal to the first distance threshold, the first condition is met, and the candidate sensing auxiliary UE 910 can be used as the sensing auxiliary UE.

The indication information carries information including at least one of:
the distance between the candidate sensing auxiliary UE 910 and the sensing target;
the first distance threshold; and
a size relationship between the first distance threshold and the distance between the candidate sensing auxiliary UE 910 and the sensing target.

For example, in a case where the first distance threshold is 100 meters and the distance between the candidate sensing auxiliary UE 910 and the sensing target is 50 meters, the distance is less than the first distance threshold, and the first condition is met; and the candidate sensing auxiliary UE 910 can be used as the sensing auxiliary UE.

With respect to (2) a distance between the candidate sensing auxiliary UE 910 and the access network device 20 being less than or equal to the second distance threshold.

In a case where the distance between the candidate sensing auxiliary UE 910 and the access network device 20 is less than or equal to the second distance threshold, the first condition is met, and the candidate sensing auxiliary UE 910 can be used as the sensing auxiliary UE.

The indication information carries information including at least one of:
the distance between the candidate sensing auxiliary UE 910 and the access network device 20;
the second distance threshold; and
a size relationship between the second distance threshold and the distance between the candidate sensing auxiliary UE 910 and the access network device 20.

For example, in a case where the second distance threshold is 200 meters and the distance between the candidate sensing auxiliary UE 910 and the access network device 20 is 100 meters, the distance is less than the second distance threshold, and the first condition is met; and the candidate sensing auxiliary UE 910 can be used as the sensing auxiliary UE.

With respect to (3) a signal quality between the candidate sensing auxiliary UE 910 and the access network device 20 being greater than or equal to the signal quality threshold.

The reference signal measurement result type used to determine the signal quality includes at least one of: RSRP, SINR, RSRQ, and RSRPP. The RSRP is a parameter representing the strength of the wireless signal, the SINR is a ratio of the strength of the received useful signal to the strength of the received noise and interference, the RSRQ is a ratio of the RSRP to the RSSI, and the RSRPP is defined as a linear average result of the channel response power of the resource element of the reference signal configured for measurement on the i-th path component, where i is a positive integer.

In a case where the signal quality between the candidate sensing auxiliary UE 910 and the access network device 20 is greater than or equal to the signal quality threshold, the first condition is met, and the candidate sensing auxiliary UE 910 can be used as the sensing auxiliary UE.

The indication information carries information including at least one of:
the signal quality between the candidate sensing auxiliary UE 910 and the access network device 20;
the signal quality threshold; and
a size relationship between the signal quality threshold and the signal quality between the candidate sensing auxiliary UE 910 and the access network device 20.

For example, in a case where the RSRP transmitted by the candidate sensing auxiliary UE 910 is -60 dBm and the signal quality threshold is -80 dBm, the RSRP transmitted by the candidate sensing auxiliary UE 910 is greater than the signal quality threshold, and the first condition is met; and the candidate sensing auxiliary UE 910 can be used as the sensing auxiliary UE.

With respect to (4) a threshold of a probability that the sensing link is a LOS path, where the sensing link includes a wireless link when the candidate sensing auxiliary UE 910 senses the sensing target.

In a case where there is no obstacle on the sensing link between the current candidate sensing auxiliary UE 910 and the sensing target as well as between the sensing target and the access network device 20, the sensing link is the LOS path. Since there is no obstacle, the signal attenuation is reduced, and the signal quality of the LOS path is better than that of the non-LOS path.

In a case where the probability that the sensing link is the LOS path is greater than or equal to the probability threshold value, the first condition is met, and the candidate sensing auxiliary UE 910 can be used as the sensing auxiliary UE.

The indication information carries information including at least one of:
the probability that the sensing link is the LOS path;
the probability threshold value; and
a size relationship between the probability that the sensing link is the LOS path and the probability threshold value.

For example, in a case where the probability threshold value is 80% and the probability that the sensing link is the LOS path is 90%, the probability that the sensing link is the LOS path is greater than the probability threshold value, and the first condition is met; and the candidate sensing auxiliary UE 910 can be used as the sensing auxiliary UE.

In step 903, the access network device confirms whether the current candidate sensing auxiliary UE is the sensing auxiliary UE participating in a sensing process.

The access network device 20 confirms whether the current candidate sensing auxiliary UE 910 is the sensing auxiliary UE participating in the sensing process according to the sensing feedback message, thereby performing the sensing process.

To summarize, in the method provided in the embodiment, the access network device 20 confirms whether the current candidate sensing auxiliary UE 910 is the sensing auxiliary UE participating in the sensing process according to the sensing feedback message, thereby helping the access network device 20 select the sensing auxiliary device more accurately, and reducing unnecessary energy consumption overhead.

FIG. 10 is a schematic diagram showing an implementation environment of an information indication method provided in an exemplary embodiment of the present disclosure, and the implementation environment includes: a sensing service UE 1010, a first candidate sensing auxiliary UE 1020, a second candidate sensing auxiliary UE 1030, and a third candidate sensing auxiliary UE 1040. The candidate sensing auxiliary UE sends condition-based auxiliary information to help the sensing service UE select a suitable sensing auxiliary UE from the plurality of different candidate sensing auxiliary UEs.

### UE-UE sensing discovery process mode B

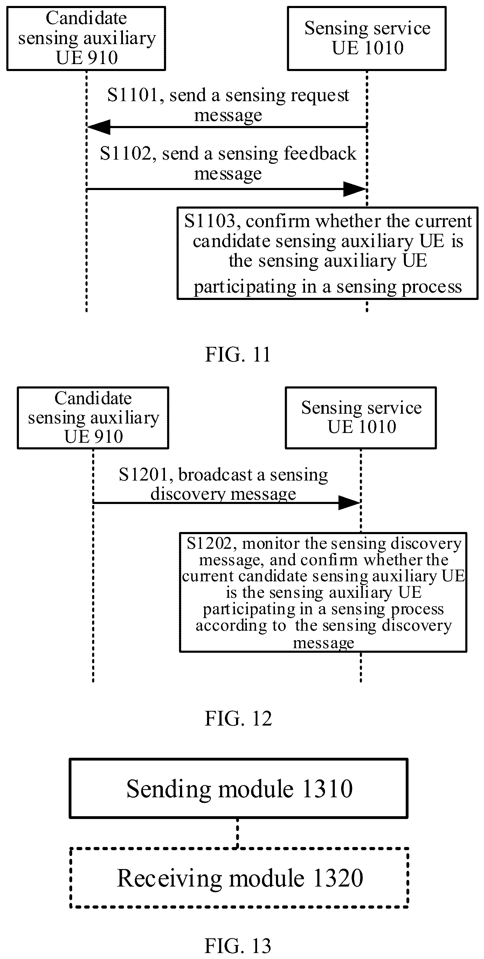

FIG. 11 is a flow chart of an information indication method provided in an exemplary embodiment of the present disclosure, and the method is performed by a candidate sensing auxiliary UE 910 and a sensing node device. This embodiment is described by taking an example where the sensing node device is a sensing service UE 1010. The method includes the following steps.

In step 1101, the sensing service UE sends a sensing request message.

The candidate sensing auxiliary UE 910 receives the sensing request message sent by the sensing service UE 1010. The sensing request message may be sent through the PC5 interface in the form of a broadcast message, a multicast message, a dedicated signaling, or the like.

The sensing request message may be carried in a request message of the sidelink discovery process mode B.

In step 1102, the candidate sensing auxiliary UE sends a sensing feedback message.

The sensing feedback message is used to indicate that the candidate sensing auxiliary UE 910 can be used as a sensing auxiliary UE in a case where the first condition is met, and the specific implementation details are referred to step 902, which will not be repeated here.

In step 1103, the sensing service UE confirms whether the current candidate sensing auxiliary UE is the sensing auxiliary UE participating in a sensing process.

The sensing service UE 1010 confirms whether the current candidate sensing auxiliary UE 910 is the sensing auxiliary UE participating in the sensing process according to the sensing feedback message, thereby performing the sensing process.

To summarize, in the method provided in the embodiment, the sensing service UE 1010 confirms whether the current candidate sensing auxiliary UE 910 is the sensing auxiliary UE participating in the sensing process according to the sensing feedback message, thereby helping the sensing service UE 1010 select the sensing auxiliary device more accurately, and reducing unnecessary energy consumption overhead.

### UE-UE sensing discovery process mode A

FIG. 12 is a flow chart of an information indication method provided in an exemplary embodiment of the present disclosure. The method is performed by a candidate sensing auxiliary UE 910 and a sensing service UE 1010, and the method includes the following steps.

In step 1201, the candidate sensing auxiliary UE broadcasts a sensing discovery message.

The sensing discovery message carries an auxiliary message selected by the sensing node, and the auxiliary message is used to indicate that the candidate sensing auxiliary UE 910 can be used as a sensing auxiliary UE in a case where the first condition is met. The specific implementation details are referred to step 902, which will not be repeated here.

The sensing discovery message is sent in the form of a broadcast message or a multicast message. The sensing discovery message may be carried in a declaration message of the sidelink discovery process mode A, and sent at a predefined discovery interval.

In step 1202, the sensing service UE monitors the sensing discovery message, and confirms whether the current candidate sensing auxiliary UE 910 is the sensing auxiliary UE participating in a sensing process according to the sensing discovery message.

The sensing service UE 1010 monitors sensing discovery messages sent by multiple different candidate sensing auxiliary UEs, and confirms whether the current candidate sensing auxiliary UE 910 is the sensing auxiliary UE participating in the sensing process according to the sensing discovery message, thereby performing the sensing process.

To summarize, in the method provided in the embodiment, the sensing service UE 1010 confirms whether the current candidate sensing auxiliary UE 910 is the sensing auxiliary UE participating in the sensing process according to the sensing discovery message, thereby helping the sensing service UE 1010 select the sensing auxiliary device more accurately, and reducing unnecessary energy consumption overhead.

FIG. 13 is a block diagram of an information indication apparatus provided in an exemplary embodiment of the present disclosure, and the apparatus includes:
a sending module 1310 configured to send indication information, where the indication information is used to indicate that a candidate sensing auxiliary device servers as a sensing auxiliary device participating in a sensing process in a case where a first condition is met.

In a possible design of the embodiment, the first condition is used to indicate that a sensing condition of the candidate sensing auxiliary device is better than a threshold value; or
the first condition is used to indicate that energy consumption of the candidate sensing auxiliary device during the sensing process is less than a threshold value; or
the first condition is used to indicate that the candidate sensing auxiliary device is related to current sensing service.

In a possible design of the embodiment, the indication information includes threshold information related to the first condition.

In a possible design of the embodiment, the threshold information includes at least one of:
a threshold of a first distance between the candidate sensing auxiliary device and a sensing target;
a threshold of a second distance between the candidate sensing auxiliary device and a sensing node device;
a threshold of a signal quality between the candidate sensing auxiliary device and the sensing node device; and
a threshold of a probability that a sensing link is a LOS path, where the sensing link includes a wireless link when the candidate sensing auxiliary device senses the sensing target.

In a possible design of the embodiment, the apparatus further includes: a receiving module 1320 configured to receive a sensing request message sent by the sensing node device.

In a possible design of the embodiment, the sending module 1310 is configured to send a sensing feedback message to the sensing node device, and the sensing feedback message carries the indication information.

In a possible design of the embodiment, the sensing request message is carried in a request message of the sidelink discovery process mode B.

In a possible design of the embodiment, the sensing feedback message is carried in a response message of the sidelink discovery process mode B.

In a possible design of the embodiment, the sending module 1310 is configured to broadcast a sensing discovery message, and the sensing discovery message carries the indication information.

In a possible design of the embodiment, the sensing discovery message is carried in a declaration message of the sidelink discovery process mode A.

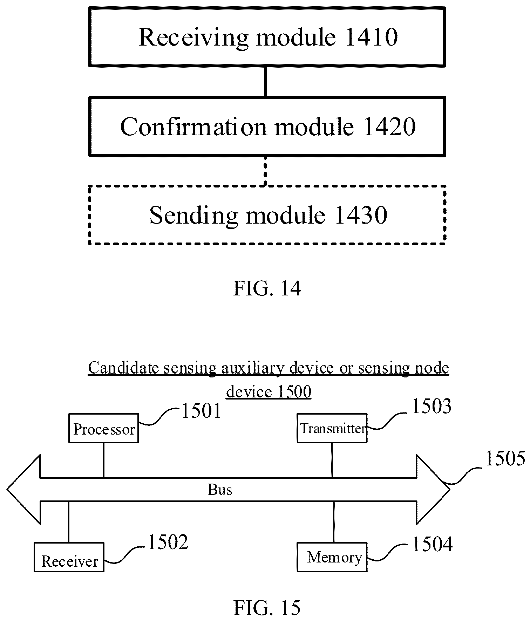

FIG. 14 is a block diagram of an information indication apparatus provided in an exemplary embodiment of the present disclosure, and the apparatus includes:
a receiving module 1410 configured to receive indication information sent by a candidate sensing auxiliary device, where the indication information is used to indicate that the candidate sensing auxiliary device servers as a sensing auxiliary device participating in a sensing process in a case where a first condition is met; and
a confirmation module 1420 configured to confirm whether the candidate sensing auxiliary device is the sensing auxiliary device based on the indication information.

In a possible design of the embodiment, the first condition is used to indicate that a sensing condition of the candidate sensing auxiliary device is better than a threshold value; or
the first condition is used to indicate that the consumption of the candidate sensing auxiliary device during the sensing process is less than a threshold value; or
the first condition is used to indicate that the candidate sensing auxiliary device is related to current sensing service.

In a possible design of the embodiment, the indication information includes threshold information related to the first condition.

In a possible design of the embodiment, the threshold information includes at least one of:
a threshold of a first distance between the candidate sensing auxiliary device and a sensing target;
a threshold of a second distance between the candidate sensing auxiliary device and a sensing node device;
a threshold of a signal quality between the candidate sensing auxiliary device and the sensing node device; and
a threshold of a probability that a sensing link is a LOS path, where the sensing link includes a wireless link when the candidate sensing auxiliary device senses the sensing target.

In a possible design of the embodiment, the confirmation module 1420 is configured to determine, based on the indication information, that the candidate sensing auxiliary device serves as the sensing auxiliary device in a case where the first condition is met.

In a possible design of the embodiment, the first condition is met, which includes at least one of:
a distance between the candidate sensing auxiliary device and the sensing target being less than or equal to the first distance threshold;
a distance between the candidate sensing auxiliary device and the sensing node device being less than or equal to the second distance threshold;
a signal quality between the candidate sensing auxiliary device and the sensing node device being greater than or equal to the signal quality threshold; and
a probability that the sensing link is the LOS path being greater than or equal to the probability threshold, where the sensing link includes a wireless link when the candidate sensing auxiliary device senses the sensing target.

In a possible design of the embodiment, the apparatus further includes: a sending module 1430 configured to send a sensing request message to the candidate sensing auxiliary device.

In a possible design of the embodiment, the receiving module 1410 is configured to receive a sensing feedback message sent by the candidate sensing auxiliary device, and the sensing feedback message carries the indication information.

In a possible design of the embodiment, the sensing request message is carried in a request message of the sidelink discovery process mode B.

In a possible design of the embodiment, the sensing feedback message is carried in a response message of the sidelink discovery process mode B.

In a possible design of the embodiment, the receiving module 1410 is configured to receive a sensing discovery message broadcast by the candidate sensing auxiliary device, and the sensing discovery message carries the indication information.

In a possible design of the embodiment, the sensing discovery message is carried in a declaration message of the sidelink discovery process mode A.

FIG. 15 is a schematic diagram showing a structure of a candidate sensing auxiliary device or sensing node device 1500 provided in an exemplary embodiment of the present disclosure, and the candidate sensing auxiliary device or sensing node device 1500 includes: a processor 1501, a receiver 1502, a transmitter 1503, a memory 1504 and a bus 1505.

The processor 1501 includes one or more processing cores, and the processor 1501 performs various functional applications and information processing by running software programs and modules.

The receiver 1502 and the transmitter 1503 may be implemented as a communication component (which may be a communication chip), and the communication component may be referred to as a transceiver.

The memory 1504 is connected to the processor 1501 via the bus 1505.

The memory 1504 may be configured to store at least one instruction, and the processor 1501 may be configured to execute the at least one instruction to implement the steps in the above-mentioned method embodiment.

In addition, the memory 1504 may be implemented by any type of volatile or non-volatile storage device or a combination thereof. The volatile or non-volatile storage device includes, but is not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In a possible implementation, the transceiver in the candidate sensing auxiliary device is configured to send indication information, and the indication information is used to indicate that the candidate sensing auxiliary device serves as a sensing auxiliary device participating in a sensing process in a case where a first condition is met.

In a possible implementation, the transceiver in the sensing node device is configured to receive indication information sent by the candidate sensing auxiliary device, and the indication information is used to indicate that the candidate sensing auxiliary device serves as a sensing auxiliary device participating in a sensing process in a case where a first condition is met; and
the processor in the sensing node device is configured to confirm whether the candidate sensing auxiliary device is the sensing auxiliary device based on the indication information.

In an exemplary embodiment, a computer-readable storage medium is also provided, in which at least one instruction, at least one program, code set or instruction set is stored, and the at least one instruction, at least one program, code set or instruction set is loaded and executed by a processor to implement the information indication method provided in the above-mentioned various method embodiments.

In an exemplary embodiment, a computer program product or a computer program is also provided. The computer program product or the computer program, when run on a processor, causes the candidate sensing auxiliary device or the sensing node device to perform the information indication method provided in the above-mentioned various method embodiments.

A person skilled in the art will understand that all or part of the steps for implementing the above embodiments may be accomplished by hardware or by instructing related hardware through a program, and the program may be stored in a computer-readable storage medium. The above-mentioned storage medium may be a read-only memory, a disk or an optical disk, or the like.

The above are only optional embodiments of the present disclosure, but not used to limit the present disclosure. Any modification, equivalent substitution and improvement, made within the spirits and principles of the present disclosure, should be all included within the protection scope of the present disclosure.

## Claims

1. An information indication method, wherein the method is performed by a candidate sensing auxiliary device, and the method comprises:
sending indication information, wherein the indication information is used to indicate that the candidate sensing auxiliary device servers as a sensing auxiliary device participating in a sensing process in a case where a first condition is met.

2. The method according to claim 1, wherein
the first condition is used to indicate that a sensing condition of the candidate sensing auxiliary device is better than a threshold value; or
the first condition is used to indicate that energy consumption of the candidate sensing auxiliary device during the sensing process is less than a threshold value; or
the first condition is used to indicate that the candidate sensing auxiliary device is related to current sensing service.

3. The method according to claim 2, wherein the indication information comprises: threshold information related to the first condition.

4. The method according to claim 3, wherein the threshold information comprises at least one of:
a threshold of a first distance between the candidate sensing auxiliary device and a sensing target;
a threshold of a second distance between the candidate sensing auxiliary device and a sensing node device;
a threshold of a signal quality between the candidate sensing auxiliary device and the sensing node device; and
a threshold of a probability that a sensing link is a line of sight (LOS) path, wherein the sensing link comprises a wireless link when the candidate sensing auxiliary device senses the sensing target.

5. The method according to any one of claims 1 to 4, wherein the method further comprises:
receiving a sensing request message sent by a sensing node device; and
sending indication information, comprises:
sending a sensing feedback message to the sensing node device, wherein the sensing feedback message carries the indication information.

6. The method according to claim 5, wherein the sensing request message is carried in a request message of sidelink discovery process mode B.

7. The method according to claim 5, wherein the sensing feedback message is carried in a response message of sidelink discovery process mode B.

8. The method according to any one of claims 1 to 4, wherein sending indication information, comprises:
broadcasting a sensing discovery message, wherein the sensing discovery message carries the indication information.

9. The method according to claim 8, wherein the sensing discovery message is carried in a declaration message of sidelink discovery process mode A.

10. An information indication method, wherein the method is performed by a sensing node device, and the method comprises:
receiving indication information sent by a candidate sensing auxiliary device, wherein the indication information is used to indicate that the candidate sensing auxiliary device servers as a sensing auxiliary device participating in a sensing process in a case where a first condition is met; and
confirming, based on the indication information, whether the candidate sensing auxiliary device is the sensing auxiliary device.

11. The method according to claim 10, wherein
the first condition is used to indicate that a sensing condition of the candidate sensing auxiliary device is better than a threshold value; or
the first condition is used to indicate that energy consumption of the candidate sensing auxiliary device during the sensing process is less than a threshold value; or
the first condition is used to indicate that the candidate sensing auxiliary device is related to current sensing service.

12. The method according to claim 11, wherein the indication information comprises: threshold information related to the first condition.

13. The method according to claim 12, wherein the threshold information comprises at least one of:
a threshold of a first distance between the candidate sensing auxiliary device and a sensing target;
a threshold of a second distance between the candidate sensing auxiliary device and the sensing node device;
a threshold of a signal quality between the candidate sensing auxiliary device and the sensing node device; and
a threshold of a probability that a sensing link is a line of sight (LOS) path, wherein the sensing link comprises a wireless link when the candidate sensing auxiliary device senses the sensing target.

14. The method according to claim 13, wherein confirming whether the candidate sensing auxiliary device is the sensing auxiliary device based on the indication information, comprises:
determining, based on the indication information, that the candidate sensing auxiliary device serves as the sensing auxiliary device in a case where the first condition is met.

15. The method according to claim 14, wherein the first condition being met, comprises at least one of:
a distance between the candidate sensing auxiliary device and the sensing target being less than or equal to the threshold of the first distance;
a distance between the candidate sensing auxiliary device and the sensing node device being less than or equal to the threshold of the second distance;
a signal quality between the candidate sensing auxiliary device and the sensing node device being greater than or equal to the threshold of the signal quality;
a probability that the sensing link is the LOS path being greater than or equal to the threshold of the probability, wherein the sensing link comprises the wireless link when the candidate sensing auxiliary device senses the sensing target; and
the candidate sensing auxiliary device being related to current sensing service.

16. The method according to any one of claims 10 to 15, wherein the method further comprises:
sending a sensing request message to the candidate sensing auxiliary device; and
receiving indication information sent by the candidate sensing auxiliary device, comprises:
receiving a sensing feedback message sent by the candidate sensing auxiliary device, wherein the sensing feedback message carries the indication information.

17. The method according to claim 16, wherein the sensing request message is carried in a request message of sidelink discovery process mode B.

18. The method according to claim 16, wherein the sensing feedback message is carried in a response message of sidelink discovery process mode B.

19. The method according to any one of claims 10 to 15, wherein receiving indication information sent by the candidate sensing auxiliary device, comprises:
receiving a sensing discovery message broadcasted by the candidate sensing auxiliary device, wherein the sensing discovery message carries the indication information.

20. The method according to claim 19, wherein the sensing discovery message is carried in a declaration message of sidelink discovery process mode A.

21. An information indication apparatus, wherein the apparatus comprises:
a sending module configured to send indication information, wherein the indication information is used to indicate that a candidate sensing auxiliary device servers as a sensing auxiliary device participating in a sensing process in a case where a first condition is met.

22. An information indication apparatus, wherein the apparatus comprises:
a receiving module configured to receive indication information sent by a candidate sensing auxiliary device, wherein the indication information is used to indicate that the candidate sensing auxiliary device servers as a sensing auxiliary device participating in a sensing process in a case where a first condition is met; and
a confirmation module configured to confirm whether the candidate sensing auxiliary device is the sensing auxiliary device based on the indication information.

23. A candidate sensing auxiliary device, wherein the candidate sensing auxiliary device comprises:
a processor;
a transceiver connected to the processor; and
a memory for storing an executable instruction of the processor;
wherein the processor is configured to load and execute the executable instruction to implement the information indication method according to any one of claims 1 to 9.

24. A sensing node device, wherein the sensing node device comprises:
a processor;
a transceiver connected to the processor; and
a memory for storing an executable instruction of the processor;
wherein the processor is configured to load and execute the executable instruction to implement the information indication method according to any one of claims 10 to 20.

25. A computer-readable storage medium, wherein the computer-readable storage medium stores a computer program, and the computer program is loaded and executed by a processor to implement the information indication method according to any one of claims 1 to 20.

26. A computer program product, wherein the computer program product comprises computer instructions, and the computer instructions are stored in a computer-readable storage medium; a processor obtains the computer instructions from the computer-readable storage medium, and the processor loads and executes the computer instructions to implement the information indication method according to any one of claims 1 to 20.

27. A computer program, wherein the computer program comprises computer instructions, and the computer instructions are stored in a computer-readable storage medium; a processor obtains the computer instructions from the computer-readable storage medium, and the processor loads and executes the computer instructions to implement the information indication method according to any one of claims 1 to 20.
